# EUROPEAN PATENT SPECIFICATION

(11) **EP 1 610 165 B1**
(45) Date of publication and mention of the grant of the patent: **12.08.2009**
(21) Application number: 04724721.8
(22) Date of filing: 31.03.2004
(51) Int. Cl.: G02B 21/00

(54) **IMMERSION OIL FOR MICROSCOPE**
IMMERSIONSÖL FÜR EIN MIKROSKOP
HUILE D'IMMERSION POUR UN MICROSCOPE

(30) Priority: 02.04.2003 JP 2003099497; 29.01.2004 JP 2004021590
(43) Date of publication of application: 28.12.2005
(73) Proprietor: IDEMITSU KOSAN CO., LTD., Tokyo 100-0005 (JP)
(72) Inventor: FUKUNAGA, Yuichi, Shunan-shi, Yamaguchi 7450843 (JP); YASUYOSHI, Matsunori, Shunan-shi, Yamaguchi 7450843 (JP)
(74) Representative: Gille Hrabal Struck Neidlein Prop Roos
(86) International application number: PCT/JP2004/004594
(87) International publication number: WO 2004/090602

(56) References cited:
- EP-A2- 0 274 731
- JP-A- 9 241 214
- JP-A- 11 218 685
- JP-A- 11 269 317
- JP-A- 61 007 438
- JP-A- 63 174 009
- US-A- 5 817 256

## Description

### TECHNICAL FIELD

The present invention relates to an immersion oil for microscopes, and more particularly to an immersion oil which exhibits suppressed fluorescence and is advantageously used for fluorescent microscopes.

### BACKGROUND ART

An immersion oil is widely used in the field of the microscope. When an immersion oil is used optically, the surface aberration is substantially decreased and the magnification of the microscope can be increased due to an increase in the numerical aperture of the object lens in comparison with the case where the immersion oil is not used.

As the immersion oil described above, an immersion oil comprising benzyl butyl phthalate and chlorinated paraffin (for example, the United States Patent No. 4465621) and an immersion oil comprising a liquid diene-based polymer and liquid paraffin (for example, Japanese Patent Application Publication Heisei 4(1992)-13687) have been known.

However, the above immersion oils have a drawback in that the immersion oils exhibit relatively strong fluorescence in the measurements using a spectrophotometer although the properties required for the immersion oil for microscopes such as the refractive index, the Abbe number, the viscosity and the resolution are approximately sufficient.

A fluorescent microscope which is used, in general, for objects exhibiting fluorescence observes the fluorescence exhibited by a specimen when the specimen is irradiated with an excitation light such as ultraviolet light and is utilized in the wide fields such as biology. In particular, technology of a fluorescent microscope which can detect a very small degree of fluorescence has recently been studied. When an immersion oil used in the optical system of the fluorescent microscope exhibits a strong fluorescence under excitement with ultraviolet light in the detection of very weak fluorescence described above, the fluorescence works as noise in the detection, and the accuracy of the detection decreases. Although various studies has been conducted on the immersion oil to improve the above drawback, it is required under the recent situation that the fluorescence exhibited with the immersion oil be further decreased. Conventional immersion oils cannot sufficiently satisfy the requirement.

Document US 5 817 256 describes an immersion oil for microscopes. In this disclosure a number of norbornane or norbornene compounds is given, for example exo-5-norbornene-2-carboxylic acid, 5-norbornene-2-carboxylic acid, 2-norbornane acetic acid, 2-norbornanemethanol, 3-methylnorbornane-2-methanol, di-2-norbornylmethanol, norborneol, 5-norbornen-2-ol, and 5-norbornene-2,2-dimethanol. Each of the norbornane or norbornene compounds which are described in US 5 817 256 must however necessarily possess an alcohol or carboxy group.

### DISCLOSURE OF THE INVENTION

The present invention has an object of overcoming the above drawback and providing an immersion oil for microscopes which exhibits suppressed fluorescence of the immersion oil itself and suppressed fluorescence under excitation with ultraviolet light, and maintains excellent other properties required for an immersion oil for microscopes such as excellent refractive index, Abbe number, viscosity and resolution and is advantageously used for fluorescent microscopes, in particular.

As the result of intensive studies by the present inventors under the above circumstances to develop an immersion oil which exhibited suppressed fluorescence and exhibited excellent other properties, it was found that the object could be achieved by using a specific norbornane and/or a specific norbornene. The present invention has been completed based on this knowledge.

The present invention provides:
(1) An immersion oil for microscopes which comprises a hydrogenation product of a monomer to a tetramer of at least one compound selected from (A) norbornanes and (B) norbornenes,
   wherein (A) the norbornanes are represented by any of general formulae: 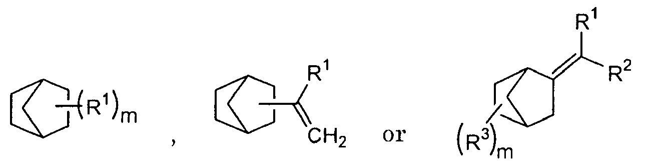 wherein R¹, R² and R³ each represent hydrogen atom or an alkyl group having 1 to 10 carbon atoms, and m represents an integer of 1 to 3; and
   wherein (B) the norbornenes are represented by any of general formulae: 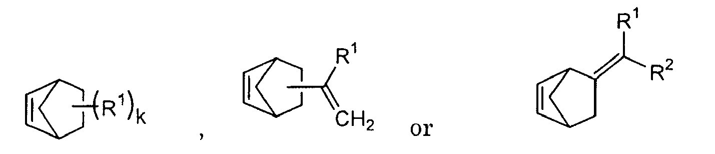 wherein R¹ and R² each represent hydrogen atom or an alkyl group having 1 to 10 carbon atoms, and k represents an integer of 1 to 3
(2) An immersion oil for microscopes described in (1), which further comprises (C) at least one substance selected from liquid polyolefins, liquid diene-based polymers and saturated hydrocarbon compounds;
(3) An immersion oil for microscopes described in (2), wherein component (C) is a liquid diene-based polymer having a number-average molecular weight of 300 to 100,000;
(4) An immersion oil for microscopes described in (2), which further comprises (D) an aromatic compound;
(5) An immersion oil for microscopes described in (4), wherein component (D) is an aromatic ester;
(6) An immersion oil for microscopes described in (5), wherein the aromatic ester is an ester of phthalic acid;
(7) An immersion oil for microscopes described in (4), wherein component (D) is an aromatic ketone; and
(8) An immersion oil for microscopes described in (4), wherein component (D) is an aromatic ether.

### THE MOST PREFERRED EMBODIMENT TO CARRY OUT THE INVENTION

The immersion oil for microscopes comprises a hydrogenation product of the monomer to the tetramer of at least one compound selected from (A) norbornanes and (B) norbornenes.

In the present invention, the hydrogenation product of the monomer to the tetramer of at least one compound selected from (A) norbornanes and (B) norbornenes is used as the essential component. The norbornanes and the norbornenes used as the raw materials for the essential component include various compounds, which can be used without particular restrictions in the present invention. Examples of the norbornanes include compounds represented by the general formulae: 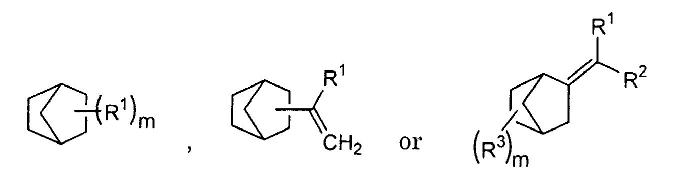 wherein R¹, R² and R³ each represent hydrogen atom or an alkyl group having 1 to 10 carbon atoms, and m represents an integer of 1 to 3;

Specific examples of the above norbornanes include alkenylnorbornanes such as vinylnorbornane and isopropenylnorbornane; and alkylidenenorbornanes such as methylenenorbornane and ethylidene-norbornane.

Examples of the norbornenes include compounds represented by the general formulae: 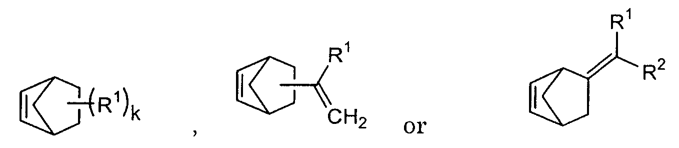 wherein R¹ and R² each represent hydrogen atom or an alkyl group having 1 to 10 carbon atoms, and k represents an integer of 1 to 3.

Specific examples of the above norbornenes include norbornene; alkylnorbornenes such as methylnorbornene, ethylnorbornene, isopropylnorbornene and dimethylnorbornene; alkenylnorbornenes such as vinylnorbornene and isopropenylnorbornene; and alkylidenenorbornenes such as methylenenorbornene, ethylidenenorbornen and isopropylidene-norbornene. It is possible that the alkenylnorbornanes and the alkylidenenorbornanes described above is obtained by partially hydrogenating the alkenylnorbornenes and the alkynylnorbornenes.

In the present invention, to obtain the dimer, the trimer or the tetramer of the norbornane or the norbornene, the norbornane or the norbornene is first dimerized, trimerized or tetramerized, respectively. The dimerization, the trimerization and the tetramerization include the dimerization, the trimerization and the tetramerization, respectively, of the same type of the monomer and the codimerization, the cotrimerization and the cotetramerization, respectively, of different types of the monomers.

The dimerization, the trimerization and the tetramerization of the norbornane and the norbornene are conducted, in general, in the presence of a catalyst and, where necessary, by adding a solvent and a reaction modifier. As the catalyst used for the dimerization, the trimerization and the tetramerization of the norbornane and the norbornene, various catalysts such as acidic catalysts and basic catalysts can be used.

As the acidic catalyst, clay such as activated clay; mineral acids such as sulfuric acid and hydrochloric acid; organic acids such as p-toluenesulfonic acid; Lewis acids such as aluminum chloride, ferrous chloride and aluminum bromide; organoaluminum compounds such as triethylaluminum; solid acids such as zeolite, silica, cation exchange resins and heteropolyacids, can be used. The acidic catalyst can be suitably selected considering the easiness of handling and economy.

Examples of the basic catalyst include organosodium compounds, organopotassium compounds and organolithium compounds.

The amount of the catalyst is not particularly limited. The amount is, in general, in the range of 0.1 to 100% by weight and preferably in the range of 1 to 20% by weight of the amount of the entire norbornanes and norbornenes.

In the dimerization, the trimerization and the tetramerization of the norbornane and the norbornene, a solvent is not always necessary. A solvent may be used for facilitating handling of the norbornane, the norbornene and the catalyst in the reaction or for adjusting the progress of the reaction.

The reaction modifier is used for achieving a suitable degree of the reaction of the norbornane and the norbornene and, in particular, for improving the selectivity of the dimerization, the trimerization and the tetramerization, where necessary. As the reaction modifier, various compounds such as anhydrides of carboxylic acids, cyclic esters and glycols can be used. The amount of the reaction modifier is not particularly limited. In general, the amount is selected in the range of 0.1 to 20% by weight of the amount of the entire norbornanes and norbornenes.

The dimerization, the trimerization and the tetramerization of the norbornane and the norbornene are conducted in the presence of the above catalyst and, in general, the reaction condition is set suitably in accordance with the types of the catalyst and additives at a temperature in the range of -30 to 180°C. For example, when clay or zeolite is used as the catalyst, the reaction is conducted at a temperature in the range of the room temperature to 180°C and preferably at a temperature of 60°C or higher. When a catalyst other than the above is used, the reaction is conducted at a temperature in the range of -30 to 100°C and preferably in the range of 0 to 60°C.

The monomers to the tetramers of the norbornane and the norbornene are hydrogenated, and the hydrogenation product of the monomer to the tetramer as the object compound can be obtained. The hydrogenation may be conducted using the entire amount of the monomers to the tetramers or using a portion thereof after fractionation or fractional distillation.

The hydrogenation of the monomers to the tetramers of the norbornane and the norbornene is, in general, conducted in the presence of a catalyst. As the catalyst, catalysts conventionally used as the hydrogenation catalyst such as the catalysts containing at least one metal such as nickel, ruthenium and palladium can be used.

The amount of the catalyst is in the range of 0.1 to 100% by weight and preferably in the range of 1 to 10% by weight of the amount of the monomer to the tetramer. The hydrogenation can proceed in the absence of solvents. However, a solvent may be used.

The temperature of the hydrogenation is, in general, in the range of the room temperature to 300°C and preferably in the range of 40 to 200°C. The pressure of the hydrogenation is in the range of the ordinary pressure to 20 MPa and preferably in the range of the ordinary pressure to 10 MPa. The hydrogenation can be conducted in accordance with a conventional procedure.

To the immersion oil for microscopes comprising the hydrogenation product of the monomers to the tetramers of the norbornane and the norbornene of the present invention, additives conventionally used for immersion oils for microscopes such as those for fluorescent microscopes can be added as long as the proper effects exhibited as the immersion oil are not adversely affected. Examples of the additive include liquid saturated hydrocarbons, aliphatic saturated alcohols, alicyclic alcohols and aromatic ester compounds. In the immersion oil of the present invention, the content of the hydrogenation product of the monomers to the tetramers of the norbornane and the norbornene is 1 to 99% by weight and preferably 10 to 80% by weight of the entire immersion oil.

As the other components in the present invention, (C) at least one substance selected from liquid polyolefins, liquid diene-based polymers and saturated hydrocarbon compounds and (D) an aromatic compound can be used. Components (C) and (D) are used for adjusting the refractive index and the Abbe number in the range such that the increase in the fluorescence exhibited by the immersion oil in the absence of excitation is not adversely affected.

Examples of the liquid polyolefin used as component (C) include polybutene and α-olefins having 8 to 24 carbon atoms. The liquid diene-based polymer is not particularly limited. In general, liquid diene-based polymers having a number-average molecular weight of 300 to 100,000, preferably 300 to 25,000 and more preferably 500 to 10,000 are used.

Examples of the liquid diene-based polymer include homopolymers and copolymers of diene monomers having 4 to 12 carbon atoms and copolymers of the diene monomers and α-olefin monomers having 2 to 22 carbon atoms which are copolymerizable by the addition polymerization. Specific examples of the liquid diene-based polymer include homopolymer of butadiene, homopolymer of isoprene, homopolymer of chloroprene, copolymers of butadiene and isoprene, copolymers of butadiene and acrylonitrile and copolymers of butadiene and 2-hexyl acrylate.

Examples of the saturated hydrocarbon include saturated hydrocarbons having 10 to 30 carbon atoms, examples of which include linear saturated hydrocarbons such as n-hexadecane, n-tetradecane and n-eicosane and branched saturated hydrocarbons such as methyldodecane.

The liquid diene-based polymer and the saturated hydrocarbon may have functional groups such as hydroxyl group at the inside and/or at the end of the molecule. Mixtures with compounds having no functional groups can also be used. Component (C) may be used singly or in combination of two or more.

The content of component (C) is 0 to 90% by weight and preferably 10 to 80% by weight of the entire immersion oil.

As the aromatic compound of component (D) used in the present invention, aromatic esters, aromatic ethers, aromatic alcohols, aromatic ketones and aromatic hydrocarbons can be used.

Examples of the aromatic ester include esters of phthalic acid. The ester of phthalic acid is not particularly limited as long as the ester of phthalic acid is an ester of phthalic acid which is liquid at the ordinary temperature and the ordinary pressure or a mixed ester of phthalic acid which is liquid at the ordinary temperature and the ordinary pressure.

Preferable examples of the esters of phthalic acid include dimethyl 1,2-benzenedicarboxylate, diethyl 1,2-benzenedicarboxylate, di-n-butyl benzenedicarboxylate, diisobutyl 1,2-benzenedicarboxylate, benzyl methyl 1,2-benzenedicarboxylate, benzyl ethyl 1,2-benzenedicarboxylate, benzyl n-butyl 1,2-benzenedicarboxylate and benzyl isobutyl 1,2-benzenedicarboxylate. The ester of phthalic acid can be used singly or in combination of two or more as long as the ester of phthalic acid is liquid at the ordinary temperature and the ordinary pressure.

Examples of the aromatic ether include compounds having two or more aromatic groups such as dibenzyl ether and compounds having one aromatic group such as butyl phenyl ether. It is preferable that the aromatic ether is liquid at the ordinary temperature and the ordinary pressure. Compounds which are not liquid at the ordinary temperature and the ordinary pressure can also be used as long as the compounds are not crystallized at low temperatures when they are used in the immersion oil.

Examples of the aromatic alcohol include phenylethanol.

The aromatic ketone is not particularly limited as long as the aromatic ketone is a generally used ketone. Preferable examples of the aromatic ketone include aromatic ketones used as the sensitizer such as acetophenone, propiophenone and benzophenone. The aromatic ketone may be used singly or in combination of two or more.

Examples of the aromatic hydrocarbon include triisopropylbenzene and t-butylxylene. The aromatic compound is not limited to the compounds shown as the examples and may be a mixture of these compounds. The content of component (D) is 0 to 60% by weight and preferably 5 to 50% by weight of the entire immersion oil.

Antioxidants and ultraviolet light absorbents can be used in consideration of the storage property of the immersion oil as long as the effect of the present invention is not adversely affected.

The process of mixing components (A) and (B) as the essential components and components (C) and (D) as the other components is not particularly limited. In general, the process comprising mixing under stirring around the ordinary temperature is advantageous.

The immersion oil for microscopes of the present invention obtained as described above can be advantageously used as the immersion oil for conventional microscopes and, in particular, as the immersion oil for fluorescent microscopes.

### EXAMPLES

The present invention will be described more specifically with reference to examples in the following. However, the present invention is not limited to the examples.

### Preparation Example 1 (Hydrogenation product of monomers to tetramers of norbornanes and norbornenes)

Into a stainless steel autoclave, 350.5 g (5 moles) of crotonaldehyde and 198.3 g (1.5 moles) of dicyclopentadiene were placed, and the reaction was allowed to proceed at 170°C for 2 hours.

After the reaction mixture was cooled, 22 g of a 5% ruthenium carbon catalyst (manufactured by N. E. CHEMCAT Co., Ltd.) was added, and the hydrogenation was conducted under a hydrogen pressure of 7 MPa at a temperature of 180°C for 4 hours. After the resultant reaction mixture was cooled and the catalyst was removed by filtration, the filtrate was treated by distillation under a reduced pressure, and 242 g of a fraction of 70°C/1.20 hPa was obtained. As the result of the analysis of the mass spectrum and the nuclear magnetic resonance spectrum, it was found that the obtained fraction was 2-hydroxymethyl-3-methyl-norbornane.

Into an atmospheric reaction tube of the flow type which was made of quartz glass and had an outer diameter of 20 mm and a length of 500 mm, 15 g of γ-alumina was placed. The dehydrogenation was conducted at a temperature of 270°C and a weight hourly space velocity (WHSV) of 1.07 hr⁻¹, and 196 g of a dehydrogenation product of 2-hydroxymethyl-3-methylnorbornane containing 65% of 3-methyl-2-methylenenorbornane and 28% of 2,3-dimethyl-2-norbornene was obtained.

A Dimroth reflux condenser and a thermometer were attached to a three-necked flask. Into the flask, 196 g of the product obtained above and 90 g of activated clay were placed, and the resultant mixture was stirred at 145°C for 3 hours. After the activated clay was removed by filtration, the reaction mixture was placed into a stainless steel autoclave, and the hydrogenation was conducted using a nickel/diatomaceous earth catalyst under a hydrogen pressure of 4 MPa at a temperature of 160°C. After the catalyst was removed by filtration, the filtrate was treated by distillation under a reduced pressure, and 116 g of a fraction having a boiling point of 126 to 128°C/0.27 hPa was obtained. As the result of the analysis of the mass spectrum and the nuclear magnetic resonance spectrum, it was confirmed that the obtained fraction was a saturated hydrocarbon having two norbornane rings in the molecule. Preparation Example 2 (Hydrogenation product of monomers to tetramers of norbornanes and norbornenes)

In accordance with the same procedures as those conducted in Preparation Example 1 except that the raw materials were changed to 1-octene and dicyclopentadiene and the reaction using activated clay was not conducted, a saturated hydrocarbon having one norbornane ring in the molecule was obtained.

### Examples 1 to 5 and Comparative Examples 1 to 3

Components shown in Table 1 were used in amounts shown in Table 1. The components were mixed under stirring at 25°C for 10 minutes. Immersion oils for microscopes were prepared in this manner and evaluated in accordance with the following methods.

### (1) Refractive index (n²³_{D}) and Abbe number (ν²³_{D})

The refractive index and the Abbe number were obtained in accordance with the methods of Japanese Industrial Standard K 2101. The preferable ranges as the immersion oil for microscope are 1.5140 to 1.5160 for the refractive index and 40 to 60 for the Abbe number.

### (2) Kinematic viscosity

The kinematic viscosity was measured in accordance with the method of Japanese Industrial Standard of K 2283. The preferable range of the kinematic viscosity as the immersion oil for microscope is 120 to 600 cSt (25°C).

### (3) Low fluorescent property

The fluorescent property was measured using a spectroscopic fluorescence meter F-2000 manufactured by HITACHI SEISAKUSHO Co., Ltd.

For the fluorescent microscope, an ultra high voltage mercury lamp emitting ultraviolet light for excitation to exhibit the fluorescence was used as the light source. The light for excitation used in the measurement included U-excitation light, V-excitation light, B-excitation light and G-excitation light in accordance with the wavelength. An immersion oil exhibiting suppressed fluorescence under each light for excitation is preferable for a fluorescent microscope. The result is expressed as good or poor.

### (4) Appearance

A sample was taken into a clean glass vessel and evaluated by the turbidity. The result is expressed as good when no turbidity was found and poor when some turbidity was found.

### (5) Weatherability

The weatherability was evaluated based on the results of the test of irradiation with light and the test of degradation under heating described in the following and the differences in the refractive index, the Abbe number and the hue before and after the tests. The result is expressed by one of the following two grades:
good: No change in the refractive index, the Abbe number and the hue
poor: Change in any one of the refractive index, the Abbe number and the hue
   (a) Test of irradiation with light
      A prescribed amount (40±0.5 g) of a sample was taken into a dish, and the change in the refractive index was measured after the sample was irradiated with light for a prescribed time (24, 72 or 120 hours). The result is expressed as good when no change was found.
   (b) Test of degradation under heating
      A prescribed amount (40±0.5 g) of a sample was taken into a 50 ml Erlenmeyer flask having a glass stopper and kept in a vessel at a constant temperature (40°C or 70°C) for 24 hours. The changes in the refractive index, the Abbe number and the hue were observed.

### (6) Corrosion resistance

Corrosion was examined by measuring the total acid value (Japanese Industrial Standard K 2501) and the effect on the dye for smear specimens (Japanese Industrial Standard K 2400). The result is expressed as good when no corrosion was found and poor when corrosion was found.

The results of the evaluations are shown in Table 1, and the intensities (the relative intensities) of fluorescence under the lights for excitation are shown in Table 2.

**Table 1**

| | 1 | 2 | 3 | 4 | 5 | | | |
|---|---|---|---|---|---|---|---|---|
| | | | | | | 1 | 2 | 3 |
| Components (part by weight) hydrogenation product of monomers to tetramers of (A) norbornanes and (B) norbornenes, obtained in: | | | | | | | | |
| Preparation Example 1 | 100 | 60 | 60 | - | 100 | - | - | - |
| Preparation Example 2 | - | - | - | 35 | - | - | - | - |
| (C) hydrocarbon compound | | | | | | | | |
| liquid polybutadiene having hydroxyl group *1 | - | 100 | - | - | - | 90 | - | 100 |
| liquid polyisoprene having hydroxyl group *2 | 50 | - | 100 | 100 | - | - | 100 | - |
| polyisoprene *5 | - | - | - | - | 35 | - | - | - |
| (D) aromatic compound | | | | | | | | |
| dimethyl phthalate | - | 40 | - | - | - | 100 | 30 | - |
| dibutyl benzyl phthalate | 50 | - | 30 | 25 | - | - | - | - |
| dibenzyl ether | - | - | - | - | 30 | - | - | - |
| propiophenone | - | - | 10 | 8 | | - | - | - |
| paraffin | | | | | | | | |
| liquid paraffin *3 | - | - | - | - | - | - | 60 | - |
| chlorinated paraffin *4 | - | - | - | - | - | 90 | - | 90 |

| Evaluation of properties of immersion oil for microscopes | | | | | | | | |
|---|---|---|---|---|---|---|---|---|
| refractive index | 1.515 | 1.515 | 1.516 | 1.516 | 1.516 | 1.515 | 1.515 | 1.515 |
| Abbe number | 46 | 44 | 43 | 42 | 45 | 43 | 41 | 44 |
| kinematic viscosity | 100 | 200 | 200 | 300 | 300 | 200 | 350 | 250 |
| low fluorescence | good | good | good | good | good | poor | poor | poor |
| appearance | good | good | good | good | good | poor | good | good |
| weatherability | good | good | good | good | good | good | good | good |
| corrosion resistance | good | good | good | good | good | good | good | good |

| | | | | | | | | |
|---|---|---|---|---|---|---|---|---|
| *1: Liquid polybutadiene having hydroxyl group: manufactured by IDEMITSU SEKIYU KAGAKU Co., Ltd.; the trade name: "Polybd R-45HT"; the number-average molecular weight: 2,800; the content of hydroxyl group: 0.83 moles/kg. *2: Liquid polyisoprene having hydroxyl group: the number-average molecular weight: 2,500; the content of hydroxyl group: 0.82 moles/kg. *3: Liquid paraffin: manufactured by IDEMITSU KOSAN Co., Ltd.; the trade name: "DUFFNY OIL CP". *4: Chlorinated paraffin: manufactured by TOSO Co., Ltd.; the trade name: "TOYOPARAX"; the content of chlorine: 50% by weight. *5: Polyisoprene: manufactured by KURARAY Co., Ltd.; the trade name: "LIR". | | | | | | | | |

**Table 2**

| Example | 1 | 2 | 3 | 4 | 5 | | | |
|---|---|---|---|---|---|---|---|---|
| Comparative Example | | | | | | 1 | 2 | 3 |
| Excitation light | | | | | | | | |
| U | 2.5 | 2.8 | 3 | 3.1 | 3.3 | 4.5 | 4 | 4.2 |
| V | 0.6 | 0.8 | 0.9 | 0.9 | 0.9 | 1.2 | 1.2 | 1.3 |
| B | 0.2 | 0.2 | 0.2 | 0.2 | 0.1 | 0.3 | 0.3 | 0.3 |
| G | 0.1 | 0.1 | 0.1 | 0.1 | 0.1 | 0.2 | 0.3 | 0.2 |

It is shown by the results in Tables 1 and 2 that the properties required for the immersion oil for microscopes are sufficiently maintained, and the low fluorescence property is improved.

### INDUSTRIAL APPLICABILITY

The immersion oil for microscopes of the present invention exhibits suppressed fluorescence and maintains excellent other properties required for the immersion oil such as the excellent refractive index, Abbe number, viscosity and resolution since the immersion oil comprises the hydrogenation product of monomers to tetramers, in particular, dimers to tetramers, of various norbornanes and norbornenes. Thus, the immersion oil for microscopes which is remarkably excellent as the immersion oil for fluorescent microscopes, in particular, can be provided.

## Claims

1. The immersion oil for microscopes which comprises a hydrogenation product of a monomer to a tetramer of at least one compound selected from (A) norbornanes and (B) norbornenes, **characterised in that**
(A) the norbornanes are represented by any of general formulae: 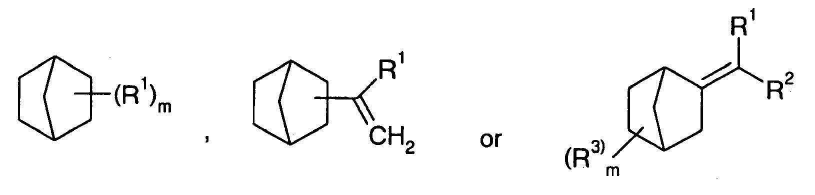 wherein R¹, R² and R³ each represent hydrogen atom or an alkyl group having 1 to 10 carbon atoms, and m represents an integer of 1 to 3, and
**in that** (B) the norbornenes are represented by any of general formulae: 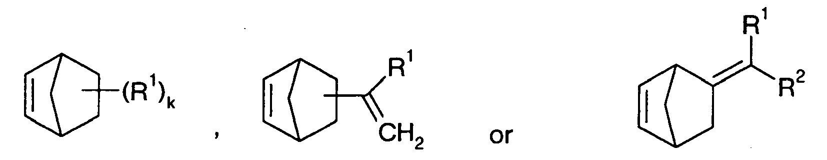 wherein R¹ and R² each represent hydrogen atom or an alkyl group having 1 to 10 carbon atoms, and k represents an integer of 1 to 3.

2. The immersion oil for microscopes according to Claim 1, which further comprises (C) at least one substance selected from liquid polyolefins, liquid diene-based polymers and saturated hydrocarbon compounds.

3. The immersion oil for microscopes according to Claim 2, wherein component (C) is a liquid diene-based polymer having a number-average molecular weight of 300 to 100,000.

4. The immersion oil for microscopes according to Claim 2, which further comprises (D) an aromatic compound.

5. The immersion oil for microscopes according to Claim 4, wherein component (D) is an aromatic ester.

6. The immersion oil for microscopes according to Claim 5, wherein the aromatic ester is an ester of phthalic acid.

7. The immersion oil for microscopes according to Claim 4, wherein component (D) is an aromatic ketone.

8. The immersion oil for microscopes according to Claim 4, wherein component (D) is an aromatic ether.

## Patentansprüche

1. Immersionsöl für Mikroskope, welches ein Hydrierungsprodukt eines Monomeren bis Tetrameren von mindestens einer Verbindung umfasst, die ausgewählt wird aus (A) Norbornanen und (B) Norbornenen, **dadurch** charakterisiert, dass (A) die Norbornane durch eine der folgenden Formeln dargestellt sind: 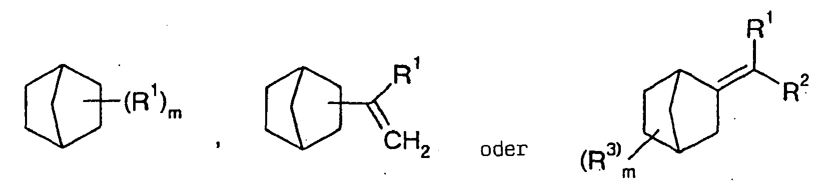 wobei R¹, R² und R³ jeweils ein Wasserstoffatom oder eine Alkylgruppe mit 1 bis 10 Kohlenstoffatomen darstellen, und m eine ganze Zahl von 1 bis 3 darstellt, und dass (B) die Norbornene durch eine der folgenden allgemeinen Formeln dargestellt werden: 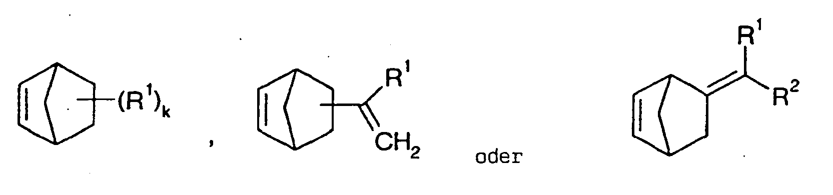 wobei R¹ und R² jeweils ein Wasserstoffatom oder eine Alkylgruppe mit 1 bis 10 Kohlenstoffatomen darstellen, und k eine ganze Zahl von 1 bis 3 darstellt.

2. Immersionsöl für Mikroskope nach Anspruch 1, welches darüber hinaus (C) mindestens eine Substanz umfasst, die ausgewählt wird aus flüssigen Polyolefinen, flüssigen Polymeren auf Dien-Basis und gesättigten Kohlenwasserstoffverbindungen.

3. Immersionsöl für Mikroskope nach Anspruch 2, wobei Komponente (C) ein flüssiges Polymer auf Dien-Basis mit einem zahlenmittleren Molekulargewicht von 300 bis 100000 ist.

4. Immersionsöl für Mikroskope nach Anspruch 2, welches darüber hinaus (D) eine aromatische Verbindung umfasst.

5. Immersionsöl für Mikroskope nach Anspruch 4, wobei Komponente (D) ein aromatischer Ester ist.

6. Immersionsöl für Mikroskope nach Anspruch 5, wobei der aromatische Ester ein Ester von Phthalsäsure ist.

7. Immersionsöl für Mikroskope nach Anspruch 4, wobei die Komponente (D) ein aromatisches Keton ist.

8. Immersionsöl für Mikroskope nach Anspruch 4, wobei Komponente (D) ein aromatischer Ether ist.

## Revendications

1. Huile d'immersion pour microscopes qui comprend un produit d'hydrogénation d'un monomère a un tétramère d'au moins un composé choisi parmi (A) les norbornanes et (B) les norbornènes, **caractérisée en ce que**
(A) les norbornanes sont représentés par l'une quelconque des formules générales : 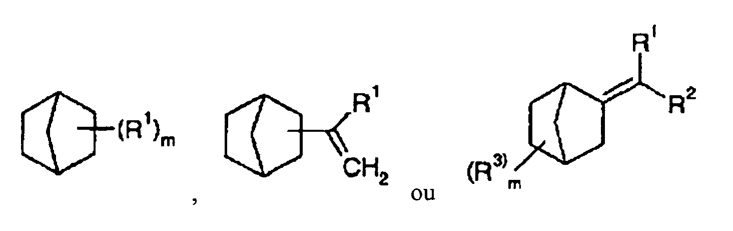 où R¹, R² et R³ représentent chacun un atome d'hydrogène ou un groupe alkyle comportant 1 à 10 atomes de carbone, et m représente un nombre entier de 1 à 3, et
**en ce que** (B) les norbomènes sont représentés par l'une quelconque des formules générales : 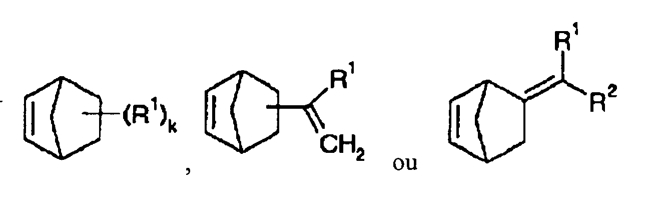 où R¹ et R² représentent chacun un atome d'hydrogène ou un groupe alkyle comportant 1 à 10 atomes de carbone, et k représente un nombre entier de 1 à 3.

2. Huile d'immersion pour microscopes selon la revendication 1, qui comprend en outre (C) au moins une substance choisie parmi les poly(oléfines) liquides, les polymères à base de diène liquides et les composés hydrocarboné saturé.

3. Huile d'immersion pour microscopes selon la revendication 2, dans laquelle le composant (C) est un polymère à base de diène liquide ayant une masse moléculaire moyenne en nombre de 300 à 100 000.

4. Huile d'immersion pour microscopes selon la revendication 2, qui comprend en outre (D) un composé aromatique.

5. Huile d'immersion pour microscopes selon la revendication 4, dans laquelle le composant (D) est un ester aromatique.

6. Huile d'immersion pour microscopes selon la revendication 5, dans laquelle l'ester aromatique est un ester d'acide phtalique.

7. Huile d'immersion pour microscopes selon la revendication 4, dans laquelle le composant (D) est une cétone aromatique.

8. Huile d'immersion pour microscopes selon la revendication 4, dans laquelle le composant (D) est un éther aromatique.
